# EUROPEAN PATENT APPLICATION

(11) **EP 1 752 379 A2**
(43) Date of publication of application: **14.02.2007**
(21) Application number: 06117132.8
(22) Date of filing: 13.07.2006
(51) Int. Cl.: B65B 31/02, B65D 43/02, B32B 3/16, B65B 25/06, A23L 3/015

(54) **Process for producing sheets transparent only in certain parts, for closing packages of food products under vacuum or in a modified atmosphere**

(30) Priority: 11.08.2005 IT MI20051567
(71) Applicant: Finepack S.r.l., 33100 Udine (IT)
(72) Inventor: Miani, Giorgio, 33044 Manzano (UD) (IT)
(74) Representative: Ripamonti, Enrico

(57) **Abstract**

The process enables transparent plastic sheets rendered opaque or non-transparent in one or more of their parts to be produced, such sheets serving to close packages of food products under vacuum or in a modified atmosphere, which use an open plastic container of substantially rigid, semirigid or flexible type. The process comprises the following steps: preparing one or more strips of opaque or non-transparent film, each strip being intended to render opaque or non-transparent a determined part of a closure sheet for a package; applying a layer of adhesive to one face of the strip or strips of opaque or non-transparent material; laminating the strip or strips of opaque or non-transparent material treated with adhesive together with a strip of transparent plastic film, to hence obtain a composite laminated strip film opaque or non-transparent in some of its parts; using said composite strip film in conventional packaging machines to obtain therefrom the partly opaque or non-transparent sheets for closing relative containers.

## Description

The present invention relates to a process for producing transparent plastic sheets which have been rendered opaque or non-transparent in one or more of their parts, such sheets serving to close packages of food products under vacuum or in a modified atmosphere, and in particular packages using an open plastic container, the container being of rigid, semirigid or flexible type, or even a simple flexible sheet which with the closure sheet forms an envelope.

It is known to form packages under vacuum or in a modified atmosphere containing for example sliced meats. These packages are in the form of transparent plastic envelopes, one face of which is externally covered completely with paper.

Such a solution is illustrated in Italian model application PR20020000004. With this solution it however impossible to view the package contents through the paper-covered face of the envelope, even though this assumes a more "rustic" appearance.

Packages are also known using substantially rigid or flexible tray containers made of a suitable transparent or non-transparent plastic material, which are closed upperly by a transparent plastic sheet thermowelded along the edge of the container, which has been previously filled with the required food. These packages are produced by high productivity automatic packaging machines, which apply the tray closure sheet by drawing it from a reel of transparent film.

The object of the present invention is to provide a process for producing transparent plastic sheets rendered opaque or non-transparent in one or more of their parts, and usable for closing a relative substantially rigid or flexible plastic container, such that its contents may be viewed through the remaining transparent part of the closure sheet. To avoid ambiguity, it should be noted that in the present context a container means a rigid, semirigid or flexible open plastic container (for example a tray) or even a simple flexible sheet able to form an envelope with the closure sheet.

This object is attained by the process of the present invention, comprising the following steps:
- preparing one or more strips of opaque or non-transparent film, each strip being intended to render opaque or non-transparent a determined part of a closure sheet for a package;
- applying a layer of adhesive to one face of the strip or strips of opaque or non-transparent material;
- laminating the strip or strips of opaque or non-transparent material treated with adhesive together with a strip of transparent plastic film, to hence obtain a composite laminated strip film opaque or non-transparent in some of its parts;
- using said composite strip film in conventional packaging machines to obtain therefrom the partly opaque or non-transparent sheets for closing relative containers.

The strip of plastic transparent material used in the process of the present invention can also be formed from several layers, for example obtained by conventionally superposing several transparent plastic film portions having however different characteristics.

The strip or strips of opaque or non-transparent material and the strip of transparent material are preferably in reel form. In particular, these reels can be obtained from reels of greater width by using conventional film cutters. Still more particularly, the reel or reels of opaque or non-transparent material are wound on a relative independent core. However if several reels of opaque or non-transparent material are required for forming each package, these reels can be wound on the same core, suitably spaced apart.

With regard to the application of the layer of adhesive to a face of the strips of opaque or non-transparent material:
- if laminating machines using the known solventless technology are utilized, an adhesive spreading roller must be prepared provided with one or more (depending on the number of reels of opaque material used to produce a closure sheet for a package) suitably spaced-apart projecting coaxial cylindrical parts of rubber, each projecting part having a width equal to that of the relative strip of opaque or non-transparent material;
- if however laminating machines using the likewise known film roll technology are utilized, the spreading roller must present the same aforesaid projecting cylindrical parts, but made of steel.

Usable solventless laminating machines include for example those manufactured by NORDMECCANICA or SCHIAVI, however laminating machines of solvent , water or adhesive type can be used. Traditional extrusion coating can also be used, all this being in any event well known to the expert of the art.

To obtain perfect centering of the strip or strips of opaque or non-transparent material unwound from the relative reel in order to then effect lamination together with the transparent plastic strip, said reel or reels are conveniently mounted on a friction-applying or differential shaft, or a shaft provided with means enabling the pull exerted on the individual strip of opaque or non-transparent material unwound from the relative reel to be controlled, in order to achieve the same tension in the various strips. A suitable conventional electronic tensioning control apparatus would be useful as an aid for said shafts.

If the transparent plastic strip is single-layer, after it has been laminated together with the strip or strips of opaque or non-transparent plastic material it is still possible to obtain a composite strip film with several transparent layers (from which the package closure sheets are then obtained) by providing, after the aforedescribed lamination step, one or more additional lamination steps, in order to add respectively one or more transparent plastic film portions to one or other side of the original composite strip film (partially opaque or non-transparent).

The opaque or non-transparent material forming the relative strips can consist of paper or a metal film (in particular aluminium), or even a suitable opaque or non-transparent plastic material in the form of film.

The plastic material forming the transparent strip can for example be polyester, for which purpose an EVOH coextrusion can be used.

The strips of opaque or non-transparent material can also present cut-outs or windows of various shapes, so that the closure sheet for the final package (assuming the container to be a tray) finally presents for example an opaque or non-transparent surround, internally of rectangular or other shape (for example circular, triangular or hexagonal). Said windows can also be provided offset relative to the individual closure sheet, in the sense that if providing in the strip of opaque or non-transparent material a series of rectangular windows, packages can be obtained in which the closure sheet is rendered opaque or non-transparent within an H-shaped window (two half-windows involving the same closure sheet).

When the composite strip film has been obtained, possibly also comprising several transparent sheets, it is cut into one or more bands. By means of this operation, from an initial "mother" reel comprising several opaque or non-transparent strips, several sub-multiple reels can be obtained having equal or different widths (possibly with the production of some scrap), suitable for feeding conventional packaging machines. The final reels obtained in this manner enable vacuum or modified atmosphere packages to be obtained in which the closure sheet enables the final consumer to view the packaged product, if only partially.

By choosing a suitable material for the strips of opaque or non-transparent film, the packages obtained can offer different presentations which can generate particular impressions in the final consumer. For example, the use of paper of ivory colour can suggest the idea of an organic product, while the use of a metal film can generate an impression of valuable contents and a superior quality product.

## Claims

1. A process for producing transparent plastic sheets rendered opaque or non-transparent in one or more of their parts, such sheets serving to close packages of food products under vacuum or in a modified atmosphere, which use an open plastic container of substantially rigid, semirigid or flexible type, comprising the following steps:
- preparing one or more strips of opaque or non-transparent film, each strip being intended to render opaque or non-transparent a determined part of a closure sheet for a package;
- applying a layer of adhesive to one face of the strip or strips of opaque or non-transparent material;
- laminating the strip or strips of opaque or non-transparent material treated with adhesive together with a strip of transparent plastic film, to hence obtain a composite laminated strip film opaque or non-transparent in some of its parts;
- using said composite strip film in conventional packaging machines to obtain therefrom the partly opaque or non-transparent sheets for closing relative containers.

2. A process as claimed in claim 1, wherein the transparent plastic strip is formed from several layers.

3. A process as claimed in claim 1, wherein the strip or strips of opaque or non-transparent material and the strip of transparent material are in reel form.

4. A process as claimed in claim 3, wherein the reels of opaque or non-transparent material are disposed on the same core suitably spaced apart.

5. A process as claimed in claim 1, wherein to apply the adhesive to one face of the strips of opaque or non-transparent material an adhesive spreading roller is used provided with the same number of suitably spaced-apart projecting coaxial cylindrical rubber parts as the number of strips of opaque or non-transparent material, each projecting rubber part having a width equal to that of the relative strip of opaque or non-transparent material.

6. A process as claimed in claim 1, wherein to apply the adhesive to one face of the strips of opaque or non-transparent material an adhesive spreading roller is used provided with the same number of suitably spaced-apart projecting coaxial cylindrical metal parts as the number of strips of opaque or non-transparent material, each projecting metal part having a width equal to that of the relative strip of opaque or non-transparent material.

7. A process as claimed in claim 4, wherein the strips of opaque or non-transparent material used to prepare the individual closure sheet are mounted on a shaft provided with means enabling the pull to be controlled in such a manner as to achieve the same tension in the various strips.

8. A process as claimed in claim 7, wherein the means for achieving the same tension in the various strips of opaque or non-transparent material comprise a friction-applying or differential sheet.

9. A process as claimed in claim 1, wherein once the partly opaque or non-transparent composite strip has been obtained by lamination, one or more additional lamination steps are provided, in order to add one or more transparent plastic film portions to one and/or the other side of said composite strip.

10. A process as claimed in claim 1, wherein the transparent strip is a polyester film.

11. A process as claimed in claim 1, wherein the transparent strip is an EVOH coextrusion.

12. A process as claimed in claim 1, wherein the strip or strips of opaque or non-transparent material consist of paper.

13. A process as claimed in claim 1, wherein the strip or strips of opaque or non-transparent material consist of a metal film.
